# EUROPEAN PATENT APPLICATION

(11) **EP 4 201 643 A1**
(43) Date of publication of application: **28.06.2023**
(21) Application number: 21217605.1
(22) Date of filing: 23.12.2021
(51) Int. Cl.: B29C 53/58, B29C 53/82

(54) **CONTINUOUS FILAMENT WINDING MACHINE AND METHOD FOR MANUFACTURING PIPES WITH SMALL DIAMETER**

(71) Applicant: Technobell D.O.O. Koper, 6000 Koper (SI)
(72) Inventor: DRAKSLER, Dusan, 6275 Crni Kal (SI); GOJAK, Peter, 6000 Koper (SI); JERMAN, Jadran, 6000 Koper (SI); RADOVAC, Simon, 6276 Pobegi (SI); SCHÖNER, Ziga, 6276 Pobegi (SI); KAVRE, Andrej, 6281 Skofije (SI); DELLA MARNA, Licio, 34139 Trieste (IT)
(74) Representative: Lucke, Andreas

(57) **Abstract**

The invention refers to a CFW machine (10) configured for manufacturing a hollow body (50) such as a pipe, of reduced diameter, for example of 300 mm or less. The CFW machine (10) comprises a continuous band (18) helically wound around a rotary mandrel (12) such that a rotation of the mandrel (12) causes the continuous band (18) to advance axially from a first axial position (Ai) towards a second axial position (A2). A first band conveying assembly (20) dispenses the continuous band (18) at the first axial position (Ai) for winding around the mandrel (12). A second band conveying assembly (22) refeeds the continuous band (18) from the second axial position (A2) to the first band conveying assembly (20). The second band conveying assembly (22) is configured for guiding the continuous band (18) such that a portion of the continuous band (18) having a reduced diameter as compared to a portion of the continuous band (18) wound around the mandrel (12) loops around the rotation axis of the mandrel (12) at least once, preferably at least twice, before guiding the continuous band (18) towards the first axial position (Ai). The invention further refers to a related method for manufacturing a hollow body (50) using a CFW machine (10).

## Description

### FIELD OF THE INVENTION

The present invention is in the field of continuous filament winding (CFW). In particular, the invention refers to a CFW machine for manufacturing a hollow body, in particular a pipe, having reduced diameter and to a related method for manufacturing a pipe using a CFW machine.

### BACKGROUND OF THE INVENTION

Filament winding is a manufacturing technique used for manufacturing hollow bodies such as cylindrical pipes in a process involving winding filaments of materials such as glass and/or carbon impregnated in resin under tension over a rotating mandrel. Once the mandrel is covered to a desired thickness, the materials can be cured and then, the mandrel is removed or extracted, leaving the hollow final product, for example a pipe of a desired diameter and thickness.

There are two basic techniques of filament winding: discontinuous filament winding (DFW) and continuous filament winding (CFW). In DFW, the filaments of material are laid using a carriage that travels along the axis of the mandrel, while the mandrel is axially fixed on a mandrel stand and rotated. In CFW, the structure of the mandrel might be similar but the filaments of material are continuously laid over a cylindrical steel band that is helically wound on the mandrel and generates an axial forward motion as the mandrel rotates. The continuous band may be wound around the mandrel left-handedly or right-handedly.

CFW is a technique typically used for manufacturing hollow bodies of large diameters in the range between 300 mm and 4 m, while hollow bodies of diameters below 300 mm are typically manufactured using DFW. This is mainly due to mechanical limitations that arise in existing CFW machines with decreasing diameter. There is a minimum diameter under which the technique is not considered feasible up to date. Therefore, hollow bodies of diameters below ca. 300 mm are being produced exclusively using the DFW technique. The DFW technique requires stopping production activities after a single piece or after single series of parts is/are produced. Still, the more efficient CFW technique is currently not deemed competitive or simply not realistic for producing hollow objects with smaller diameters.

Thus, there is room for technical improvement in the field of hollow body production using CFW.

### SUMMARY OF THE INVENTION

The present invention addresses the technical problem of making the CFW technique competitive and feasible for producing hollow bodies, in particular pipes, with diameters of 300 mm or less, in particular 280 mm or less or 250 mm or less. This is solved by a CFW machine according to claim 1 and by a method according to claim 13.

As previously mentioned, the production of hollow bodies with smaller diameters brings along a series of technical challenges that are the reason for which the CFW technique had been discarded up to now for producing hollow bodies with diameters of 300 mm or below, in particular of 280 mm or below or of 250 mm or below. The present inventors have developed a number of technical improvements that allow a CFW machine viably and reliably manufacturing hollow bodies, such as pipes, with inner diameters in the range of 300 mm and below, in particular 280 mm and below or 250 mm and below.

A first aspect of the invention refers to a CFW machine for manufacturing a hollow body, in particular a hollow pipe, preferably a glass reinforced plastic (GRP) pipe.

The CFW machine comprises a rotary mandrel. The mandrel maybe substantially cylindrical. The mandrel may comprise a fixed shaft and a rotary shaft, which may both be substantially cylindrical, wherein the fixed shaft is may be concentrically received within the rotary shaft such that the rotary shaft is rotatable around a fixed shaft. The fixed shaft hence may hence have a smaller diameter than the rotary shaft, which may be rotatable around the fixed shaft and may be supported by the fixed shaft. The fixed shaft may a greater extension along the axial direction than the rotary shaft. However, other configurations in which the rotary mandrel is a one-piece mandrel may be used.

The CFW machine may further comprise a mandrel stand for holding the mandrel, in particular a fixed shaft thereof, at a fixed end of the mandrel and for driving a rotation of the mandrel, in particular of a rotary shaft of the mandrel. The mandrel stand may hence have a two-fold functionality: holding the mandrel at the fixed axial end, thereby making possible a cantilevered configuration of the mandrel for manufacturing a hollow body according to the CFW technique and, further, driving the rotation of the mandrel. The mandrel, in particular a fixed shaft thereof, may extend in the axial direction between the fixed axial end thereof and a floating axial end thereof opposite the fixed axial end.

The CFW machine further comprises a continuous band helically wound around the mandrel, possibly around a rotary shaft of the mandrel, and between a first axial position and a second axial position. Between the first axial position and the second axial position, which includes an axial extension of the mandrel over which the continuous band is wound around the mandrel, the continuous band has a predetermined constant diameter corresponding to an inner diameter of a hollow body to be manufactured using the CFW machine. A rotation of the mandrel causes a portion of the continuous band that is wound around the mandrel to rotate with the rotary shaft and to simultaneously advance axially from the first axial position towards the second axial position. This is due to the combined effect of the rotating motion of the mandrel and to the helical configuration of the continuous band between the first and second axial positions, which translates the rotary motion of the mandrel into an axial translation of any given point of said portion of the continuous band. The continuous band may be helically wound around the mandrel with a helix pitch corresponding to a width of the continuous band, i.e. such that each turning of the continuous band abuts against an adjacent turning, i.e. such that there is no empty interspace between successive turns of the continuous band around the mandrel and between the first and second axial positions.

A portion of the continuous band having the aforesaid predetermined constant diameter corresponding to the inner diameter of a hollow body to be manufactured using the CFW machine has an axial extension corresponding to an axial separation between the first axial position and the second axial position, which may be greater than an axial extension of the mandrel, in particular of a rotary shaft thereof. An axial extension of the mandrel is comprised between the first axial position and the second axial position, although the mandrel does not necessarily extend in the axial direction all the way from the first axial position to the second axial position. Thus, the portion of the continuous band having the aforesaid predetermined constant diameter, which extends in the axial direction between the first and second axial positions, may axially extend beyond the mandrel, as will be explained in more detail below.

The CFW machine further comprises a first band conveying assembly for dispensing the continuous band at the first axial position for winding around the mandrel. The first band conveying assembly hence feeds the continuous band at the first axial position such that the continuous band starts winding around the mandrel after being dispensed by the first band conveying assembly. The first band conveying assembly may be integrated in or connected to the aforementioned mandrel stand.

The CFW machine further comprises a second band conveying assembly for refeeding the continuous band to the first band conveying assembly from the second axial position. At the second axial position, after having advanced axially from the first axial position to the second axial position due to the rotary motion of the mandrel and to the helical configuration of the continuous band wound around the mandrel, the continuous band is redirected by the second band conveying assembly for being led back to the first band conveying assembly in order to restart the circuit. As seen from the outside, the continuous band may operate as an endless band and may be stationary as a whole with respect to the static components of the CFW machine, for example with respect to a fixed shaft of the mandrel. However, any given point of the endless band may be continuously moving, in particular advancing axially with respect to the mandrel when moving between the first axial position and the second axial position of the mandrel.

The continuous band works as a mould for the hollow body to be formed. This is why the diameter of the continuous band wound around the mandrel corresponds to an inner diameter of the hollow body to be manufactured using the CFW machine of the invention. The materials used for manufacturing the hollow body may be deposited layer-by-layer and/or simultaneously over the continuous band and/or on top of each other. The materials used for manufacturing the hollow body may for example be or comprise a resin, hoop glass, sand, chopped glass and/or a C-veil.

The rotary movement of the mandrel is transmitted to the continuous band and causes the materials deposited over the continuous band to distribute around the perimeter of the continuous band, thereby forming a hollow body reproducing the rotational symmetry of the continuous band wound around the mandrel. Further, the advance of the continuous band in the axial direction, causes the materials deposited over the continuous band to continuously advance in the axial direction away from the first axial position. As a result, a precursor of the final hollow body, containing all necessary (precursor) materials, may continuously and increasingly protrude past the floating axial end of the mandrel and past the second axial position away from the first axial position and from the fixed axial end of the mandrel, surrounding an axial projection of the mandrel and maintaining the hollow form defined by the continuous band.

Downstream from the mandrel, further tools may be foreseen in a production line arranged alone the axial direction for curing the (precursor) materials used for forming the hollow body and/or for cutting the hollow body to determine an axial length of the finalised hollow body. For example, if the hollow body to be formed corresponds to a 8m-long hollow pipe, a cutting tool may be configured to cross-sectional cut the hollow body every time a 8m-long portion thereof has been fully manufactured.

The second band conveying assembly comprises a guiding structure configured for guiding the continuous band from the second axial position towards the first axial position within a space radially confined by a diameter of said portion of the continuous band wound around the mandrel, i.e. by the constant diameter of the continuous band between the first and second axial positions. The second band conveying assembly may be configured for guiding the continuous band from the second axial position towards the first axial position through the mandrel, in particular through the interior of a fixed shaft of the mandrel.

Since the continuous band has to be guided back from the second axial position to the first axial position via the first band conveying assembly, at some point along the axial direction after the second axial position, an axial component of the path followed by the continuous band, which component points from the first axial position towards the second axial position between the first and second axial positions and possibly past the second axial position, has to be inverted such that the continuous band starts advancing back towards the first axial position, i.e. no longer away from the first axial position. This inversion of the axial component of the path followed by the continuous band must take place within said space radially confined by the diameter of said portion of the continuous band that is wound around the mandrel and between the first and second axial positions in other to allow the hollow body being manufactured to advance progressively protruding in the axial direction from the second axial position as greater and greater lengths of the hollow body are formed according to the CFW technique. Otherwise, a portion of the hollow body protruding from the second axial position and/or from the floating axial end of the mandrel would eventually collision against the portion of the continuous band at which the continuous band is being redirected back towards the first axial position.

In CFW machines configured for manufacturing hollow bodies of larger diameters, in particular of diameters of more than 300 mm, this geometrical issue is not critical, for there is enough space for the continuous band to be redirected back towards the first axial position. However, for diameters of 300 mm and below, in particular of 280 mm or below or of 250 mm or below, a critical dimension is reached due to the increasing curvature of the continuous band that is required for being redirected towards the first axial position within the limited space available, in particular in the radial direction. If the continuous band is curved too much and/or is made to change direction too abruptly, it can get off path during the operation of the CFW machine and can cause damage to the machine itself and/or to the hollow body being manufactured.

According to the invention, the guiding structure is configured for guiding the continuous band downstream from the second axial position away from the second axial position around an axial projection of the rotation axis of the mandrel such that a portion of the continuous band having a diameter smaller than the diameter of said portion of the continuous band wound around the mandrel (i.e. smaller than the predetermined constant diameter the continuous band has between the first and second axial ends) loops around the axial projection of the rotation axis of the mandrel at least once, preferably at least twice, in particular away from the first and second axial positions, before guiding the continuous band towards the first axial position, i.e. before inverting an axial component of a path followed by the continuous band. A loop maybe understood herein as a complete 360° winding around the axial projection of the mandrel. After looping around the axial projection of the rotation axis of the mandrel this way, the continuous band may be directed towards the first axial position through the mandrel, for example through a longitudinal axial opening of a fixed shaft of the mandrel. "Downstream from the second axial position" may refer herein in particular to a region of space which, considered in the direction in which the continuous band advances from the first axial position to the second axial position, is axially arranged after the second axial position. Thus, for example for the continuous band, "downstream from the second axial position" refers to an axial position at which the continuous band has left the second axial position behind.

The guiding structure may partly extend in the axial direction between the first and second axial positions and may hence be configured for guiding the continuous band, first upstream from the second axial position away from the first axial position and towards the second axial position and around an axial projection of the rotation axis of the mandrel having a diameter equal to the diameter of said portion of the continuous band wound around the mandrel and possibly having an helix pitch equal to an helix pitch of said portion of the continuous band wound around the mandrel, i. e. keeping constant the diameter and possibly the helix pitch of the continuous band, and for guiding the continuous band then. downstream from the second axial position, i.e. beyond the second axial position, away from the first and second axial positions around the axial projection of the rotation axis of the mandrel having a diameter smaller than the diameter of said portion of the continuous band wound around the mandrel and possibly having an helix pitch greater than an helix pitch of said portion of the continuous band wound around the mandrel,

In other words, the configuration of the guiding structure for guiding the continuous band downstream from the second axial position away from the second axial position around an axial projection of a rotation axis of the mandrel such that the continuous band loops around said axial projection of the rotation axis of the mandrel at least once, preferably at least twice, before guiding the continuous band towards the first axial position, refers in particular to a portion of the continuous band that is not in contact with a hollow body during the production of said hollow body, in particular with an inner side of the hollow body. This is in contrast to the axially preceding portion of the continuous band that is wound around the rotation axis of the mandrel between the first and second axial positions, at which the continuous band has the predetermined constant diameter and that is in contact with a hollow body being produced, in particular with an inner side thereof.

The present inventors found out that it is possible to accomplish the redirectioning of the continuous band at the second axial position towards the first axial position smoothly, even for reduced band diameters of 300 mm or below, in particular of 280 mm or below or of 250 mm or below, by guiding the continuous band downstream from the second axial position away from the second axial position (and away from the first axial position), around an axial projection of the rotation axis of the mandrel such that a portion of the continuous band no longer having the same diameter it has when wound around the mandrel and between the first and second axial positions but a smaller diameter loops around the axial projection of the rotation axis of the mandrel - while axially moving away from the mandrel - at least once, for example one and a half times, preferably at least twice, for example two or two and a half times, before guiding the continuous band back towards the first axial position, i.e. before reaching the turning point at which the axial component of the path followed by the continuous band is inverted and the path followed by the continuous band starts being directed towards the first axial position, no longer away from the first axial position. Again, "being directed towards the first axial position", as referred herein to the continuous band, should be interpreted as referring to the path followed by the continuous band and not to a translation of the continuous band as a whole, i.e. to a movement of a given point of the continuous band, even though the continuous band as a whole remains stationary with respect to other components of the CFW machine operating as an endless continuous band.

The aforementioned axial projection of the rotation axis of the mandrel may be understood as an imaginary longitudinal projection of the rotation axis of the mandrel along the axial direction thereof. Between the first and second axial positions, the continuous band is helically wound around the mandrel and possibly around an axial projection of the mandrel having a substantially constant diameter determined by geometry of the CFW machine and a substantially constant helix pitch. Downstream from the second axial position in the axial direction, the continuous band may smoothly and progressively deviate from the previous helicoidal path while advancing away from the mandrel and from the second axial position, having a diameter smaller than the aforesaid constant diameter and possibly having a helix pitch greater than the aforesaid constant helix pitch, and starts following a new path, which may possible continue to be helicoidal over some portion of the path followed by the continuous band, but which is configured in order to smoothly modify a curvature of the continuous band for redirecting the continuous band back towards the first axial position for being fed back to the first band conveying assembly.

This innovative way of redirecting the continuous band using the guiding structure of the second band conveying assembly extends the range of hollow bodies that can be manufactured using a CFW machine to diameters of 300 mm or less, in particular of 280 mm or below or of 250 mm or below. According to some embodiments, the band diameter may be 300 mm or less, for example 290 mm or less, preferably 250 mm or less, more preferably 200 mm or less or 150 mm or less, or even 100 mm or less. Thus, while the CFW technique had been discarded up to date due to technical challenges for producing hollow bodies, in particular hollow pipes, having an inner diameter of 300 mm or below, in particular of 280 mm or below or of 250 mm or below, the developments introduced by the present inventors, in particular the path followed by the continuous band downstream from the second axial position, allows using a CFW machine for manufacturing hollow bodies, in particular hollow pipes, having an inner diameter D with 300 mm ≥ D ≥ 80 mm, for example 290 mm ≥ D ≥ 80 mm, in particular 250 mm ≥ D ≥ 80 mm, 200 mm ≥ D ≥ 80 mm, 150 mm ≥ D ≥ 80 mm or even 100 mm ≥ D ≥ 80 mm.

Accordingly, in preferred embodiments of the invention, the diameter of said portion of the continuous band wound around the mandrel may be 300 mm or less, for example 290 mm or less, preferably 280 mm or less, more preferably 250 mm or less or even 200 mm or less. The diameter of said portion of the continuous band wound around the mandrel may correspond to the aforementioned inner diameter D in the previously described ranges. The minimal possible value of D may be determined by the geometry of the CFW machine and may be in some cases from about 150 mm to about 80 mm.

According to preferred embodiments of the invention, the guiding structure may be configured for guiding the continuous band, in particular said portion of the continuous band having a diameter smaller than the diameter of said portion of the continuous band wound around the mandrel, around the axial projection of the rotation axis of the mandrel with a helix pitch that increases, in particular continuously and/or monotonously, with increasing distance from the first (and second) axial position, at least over a portion of an extension of the continuous band, before guiding the continuous band towards the first axial position. Thus, while the continuous band may be helically wound around the mandrel and an axial projection thereof having a constant predefined helix pitch between the first and second axial positions, downstream from the second axial position in the axial direction, the guiding structure may be configured for guiding the continuous band such that it continues to follow a helical path while looping around the axial extension of the rotation axis of the mandrel but with a different helix pitch, which may in particular be greater than the constant predefined helix pitch the continuous band has between the first and second axial positions, and which may increase with increasing distance from the first and second axial positions before the continuous band is redirected towards the first axial position, for example through the interior of the mandrel, in particular through the interior of the fixed shaft of the mandrel. This further contributes to ensuring the stability and functionality of the continuous band for the small range of diameters for which the CFW machine of the invention is specifically designed, as the present inventors found out.

According to preferred embodiments of the invention, the guiding structure may be configured for guiding the continuous band, in particular said portion of the continuous band having a diameter smaller than the diameter of said portion of the continuous band wound around the mandrel, around the axial projection of the rotation axis of the mandrel having a diameter that decreases, in particular continuously and/or monotonously, with increasing distance from the first (and second) axial position, at least over a portion of an extension of the continuous band, before guiding the continuous band towards the first axial position. While the continuous band is wound around the mandrel and an axial projection thereof having a constant diameter corresponding to the predefined constant diameter between the first and second axial positions, downstream from the second axial position in the axial direction, the guiding structure may be configured for guiding the continuous band such that it continues to follow a helical path while looping around the axial extension of the rotation axis of the mandrel but with a different diameter, which may in particular be smaller than the constant predefined diameter the continuous band has between the first and second axial positions, and which may decrease with increasing distance from the first and second axial positions before the continuous band is redirected towards the first axial position, for example through the interior of the mandrel, in particular through the interior of the fixed shaft of the mandrel. This also contributes to ensuring the stability and functionality of the continuous band for the small range of diameters for which the CFW machine of the invention is specifically designed, as the present inventors found out.

In preferred embodiments of the invention, the second band conveying assembly may comprise an axial portion extending in the axial direction distally from the mandrel, and a plurality of band guiding elements for guiding the continuous band around the axial projection of the rotation axis of the mandrel and towards the first axial position, in particular through the interior of the mandrel, for example through the interior of a fixed shaft of the mandrel, and through the interior of the axial portion. The axial portion may be attached to a fixed shaft of the mandrel. The axial portion may be configured as a substantially cylindrical hollow body, e.g. as a shaft portion, and may have a longitudinal extension in the axial direction considerably smaller than a longitudinal extension of the mandrel in the axial direction and/or than an axial distance between the first and second axial positions. For example for an axial distance between the first and second axial positions of 3 m, the axial portion of the second band conveying assembly may have a length of about 1 m or less in the axial direction.

The band guiding elements may preferably be configured as rolling elements and/or as sliding-clamping elements. The rolling elements may for example be or comprise - each of them - a pulley configured for supporting, with its own rotation, a translational movement and possibly a change of direction of the continuous band. The sliding-clamping elements may for example be a comprise - each of them - clamping mechanism configured for fixating a position of the continuous band in a direction perpendicular to the direction in which the continuous band advances and sliding means configured for letting the continuous band slide through the clamping mechanism in the direction in which the continuous band advances.

The second band conveying assembly may further comprise a curved portion, for example a curved rod, which may be preferably attached to the axial portion, configured for turning around an axial component of the path followed by the continuous band, such that said axial component is directed towards the first axial position instead of away from the first axial position by being guided along the curved portion. At least some of the plurality of band guiding elements may be arranged in the curved portion of the second band conveying assembly. Thus, the curved portion element maybe a component of the second band conveying assembly responsible for reorienting/reversing an axial component of the path followed by the continuous band such that the continuous band stops advancing away from the first axial position and starts advancing towards the first axial position, for example towards the interior of the fixed shaft of the mandrel. The curved portion may hence be a correspondingly curved element: the curved portion may in particular be curved around a vertex, wherein said vertex maybe arranged at a maximal distance from the first axial position in the axial direction with respect to any other point of the curved portion. When guided by the curved portion, the vertex may correspond to the point at which the axial component of the path followed by the continuous band is inverted.

The CFW machine may further comprise a plurality of radial structural elements, which may in particular be all identical. The plurality of radial structural elements may be attached to the mandrel, in particular to an outer surface thereof, for example to an outer surface of a rotary shaft of the mandrel, extending radially with respect to the mandrel parallel to each other. Thus, each radial structural element of the plurality of radial structural elements may be attached to the mandrel, in particular to the rotary shaft of the mandrel, at a corresponding axial position, with all radial structural elements extending parallel to each other in a radial direction perpendicular to the axial direction defined by the mandrel. Preferably, the plurality of radial structural elements may be evenly spaced on the mandrel along the axial direction.

The CFW machine may further comprise a plurality of conveyor rails extending axially with respect to the mandrel between the first axial position and the second axial position. An axial extension of the conveyor rails may correspond to an axial extension of the mandrel, in particular of a rotary shaft of the mandrel. The plurality of conveyor rails may hence extend in parallel to the axial direction defined by the mandrel and substantially covering a longitudinal extension of the mandrel in the axial direction between the first axial position and the second axial position. The plurality of conveyor rails may be mounted on the plurality of radial structural elements, such that the plurality of conveyor rails may be arranged around the mandrel, in particular on a perimeter of the plurality of radial structural elements, and may be configured to rotate with the mandrel, in particular with the rotary shaft thereof. In such embodiments, the continuous band is wound around the mandrel on the conveyor rails. As the mandrel rotates, the continuous band rotates with the mandrel and advances in the axial direction towards the second axial position by moving in contact with the conveyor rails, for example by sliding against the conveyor rails and/or by moving past the rotating rolling elements of the conveyor rails with which the continuous band may be in contact.

"Conveyor rail" refers herein to an element configured for letting an object easily slide against at least one of its surfaces in order to convey the object along the longitudinal direction of the conveyor rail. The conveyor rails may for example be configured as longitudinal beams comprising a plurality of rolling elements extending in line next to each other along the axial direction, wherein the plurality of rolling means may be exposed at an outer surface of the conveyor rail that faces radially outwards when the conveyor rail is mounted on the plurality of radial structural elements. The rolling elements may be the most radially protruding part of its conveyor rail. As the mandrel rotates, the continuous band rotates with the mandrel and may advance in the axial direction towards the second axial position by moving in contact with the rolling elements of the conveyor rails.

In preferred embodiments of the invention, the radial structural elements may be configured for being attached to the mandrel, in particular to the rotary shaft of the mandrel, by means of removable attachment elements, in particular screws, preferably without any spacers therebetween, i.e. between each of the radial structural elements. In CFW machines known from the prior art, spacers are typically used for ensuring that radial structural elements are kept at a predefined constant axial distance from each other. According to these embodiments, it is possible to avoid the need of using spacers between the radial structural elements if the radial structural elements can be attached to the rotary shaft of the mandrel using the removable attachment elements. For example, each of the radial structural elements may comprise one or more attachment openings for receiving therein a corresponding screw that attaches the respective radial structural element to the mandrel and fixates an axial end of said radial structural element on the mandrel, in particular on the rotary shaft.

According to preferred embodiments of the invention, the radial structural elements may be disc-shaped elements comprising a plurality of grooves formed around the perimeter thereof. Each groove may be configured for receiving a part of one of the plurality of conveyor rails. Thus, each conveyor rail, when mounted on the plurality of radial structural elements, maybe received within a groove of each radial structural element of the plurality of radial structural elements. For this purpose, the disc shaped radial structural elements may be correspondingly positioned on the mandrel such that the grooves of different radial structural elements are aligned with each other in the axial direction. In particular, all radial structural elements may have an identical number of grooves.

Due to the presence of grooves in the radial structural elements, a plurality of radially protruding teeth may be formed alternatingly interspaced with the plurality of grooves. Each tooth of the plurality of teeth may comprise a bottom part fixedly attached to the rest of the corresponding radial structural element and a separated top part adjustably attachable to the respective bottom part by means of an adjustment element, preferably of an adjustment screw. The top part of the plurality of teeth may and the adjustment elements be configured for clamping the conveyor rails in position by exerting pressure thereon, preferably laterally. The radial structural elements and the adjustment elements may be configured such that a radial distance between the top part of each tooth and the corresponding bottom part may be reduced by tightening the respective adjustment element, thereby increasing a lateral pressure exerted upon the laterally adjacent conveyor rails received in respective neighbouring grooves. According to these embodiments, it is possible to finely adjust a radial position of the conveyor rails for each radial structural element by correspondingly adjusting the respective adjustment element. For example, if a given conveyor rail has to be moved radially inwards at a given radial structural element, these may be achieved by tightening the corresponding adjustment element. Instead, if said given conveyor rail has to be moved radially outwards at said given radial structural element, this may be achieved by loosening the corresponding adjustment element and possibly by introducing a radial spacer between the conveyor rail and the bottom of the respective groove.

In preferred embodiments of the invention, the continuous band may have a thickness from 0,4 mm to 2,5 mm, preferably from 0,65 mm to 2,0 mm and/or wherein the continuous steel band has a width from 10 mm to 80 mm, preferably from 30 mm to 50 mm. As the present inventors found out, such dimensions of the continuous band are optimal for manufacturing hollow bodies in the targeted diameter range of 300 mm or less, in particular of 280 mm or less or of 250 or less. The continuous band may be made of a metal, in particular steel.

According to preferred embodiments of the invention, the CFW machine may further comprise a dosing unit for dispensing one or more materials over the continuous band. The one or more materials may be or comprise materials used for manufacturing the hollow body being manufactured in the CFW machine of the invention, in particular sand. The dosing unit may comprise an output box arranged substantially vertical with respect to the continuous band. The output box may preferably have an aperture in a direction perpendicular to the axial direction of 1 cm to 5 cm. For example, the output box may have a substantially rectangular cross-section of 2 cm × 30 cm, with the long side extending in the axial direction. Additionally, the dosing unit may further comprise a tilted slide arranged tilted with respect to output box and configured for dispensing the one or more materials into the output box before the output box then dispenses the one or more materials over the continuous band.

In CFW machines known from the prior art, which are typically used for manufacturing hollow bodies of diameters greater than 300 mm, dosing units used for dispensing materials over the continuous band typically comprise only one tilted slide arranged not vertically with respect to the continuous band but tilted, e.g. at an angle of about 45°. This results in a more disperse dispensing of the materials over the continuous band, which may be appropriate for manufacturing hollow bodies of greater diameters. The present inventors realised that, for manufacturing hollow bodies having smaller diameters, in particular a diameter of 300 mm or less 280 mm or less or 250 mm or less, it is more efficient to use a dosing unit configured for dispensing the one or more materials vertically upon the continuous band, such that said one or more materials - by falling down vertically due to gravity from an output box according to this embodiment of the invention - are more concentrated in space when they reach the continuous band or a previous layer of material already laid on the continuous band. The output box having an aperture in a direction perpendicular to the axial direction, i.e. in a direction parallel to the rotation of the mandrel, in a range of 1 cm to 5 cm, further contributes to concentrating the flow of material(s) from the dosing unit over the continuous band.

In preferred embodiments of the invention, the mandrel may be configured as explained above as a mandrel comprising a fixed shaft and a rotary shaft, the fixed shaft being concentrically received within the rotary shaft such that the rotary shaft is rotatable around the fixed shaft. One or more separators may be arranged on and around the fixed shaft between the fixed shaft and the rotary shaft. The one or more separators may for example be configured as bearing rings arranged around the fixed shaft separating the inner shaft from the rotary shaft. The one or more separators may be made of a low-friction material such as Teflon, copper, bronze, and/or a low-friction plastic material such as polyamide, polyethylene and/or polypropylene. One or more retention elements, for example one or more screws, may be used for blocking an axial arrangement of the one or more separators, such that the one or more separators do not slide in the axial direction. Due to the cantilevered configuration of the mandrel, the mandrel may tilt in the axial direction, such that the second axial position may end up being lower than the first axial position, which can normally cause the rotary shaft to slide off the inner shaft towards the second axial position. The presence of the one or more separators may ensure that the rotary shaft does not axially slide with respect to the fixed shaft and/or does not uncontrolledly contact the fixed shaft, thereby guaranteeing the functionality of the CFW machine.

A second aspect of the invention refers to a method for manufacturing a hollow body, in particular a pipe, preferably a glass reinforced plastic pipe, using a CFW machine. The CFW machine may in particular be a CFW machine according to any of the embodiments of the first aspect of the invention described above. In any case, the CFW machine comprises a continuous band rotating around an axis of rotation and helically wound around the axis of rotation having a constant diameter between a first axial position and a second axial position. The method comprises guiding the continuous band downstream and away from the second axial position around the rotation axis such that a portion of the continuous band having a diameter smaller than said constant diameter loops around the rotation axis, for example one and a half times, preferably at least twice, for example two and a half times, before guiding the continuous band towards the first axial position. Notably, if a CFW machine according to the first aspect of the invention is used, the "axis of rotation" (of the continuous band) can be identified with the "axis of rotation of the mandrel" and with an axial projection thereof.

According to the second aspect of the invention, the continuous band of the CFW machine, which is wound around the axis of rotation, for example around the mandrel of the CFW machine according to the first aspect of the invention, between the first axial position and the second axial position having a constant diameter predetermined by a geometry of the CFW machine, is guided around the rotation axis downstream from the second axial position and away from it defining at least one complete loop around said rotation axis, preferably at least two complete loops. A first portion of the continuous band extends in the axial direction from the first axial position and the second axial position and is in contact with the hollow body being manufactured, while a second portion of the continuous band extending in the axial direction downstream from the second axial position is no longer in contact with the hollow body being manufactured.

The hollow body manufactured by the method according to the second aspect of the invention may have an inner diameter of 300 mm or less, for example 290 mm, preferably 280 mm or less, more preferably 250 mm or less or 200 mm or less. The diameter of the hollow body may in particular be a diameter D: 300 mm ≥ D ≥ 80 mm, for example 290 mm ≥ D ≥ 80 mm, in particular 250 mm ≥ D ≥ 80 mm, 200 mm ≥ D ≥ 80 mm, 150 mm ≥ D ≥ 80 mm or even 100 mm ≥ D ≥ 80 mm.

The method may comprise performing the following processes while the continuous band is rotating around the rotation axis and continually advancing axially from the fixed axial position towards the floating axial position, for example due to a corresponding rotation of a mandrel of a CFW machine according to the first aspect of the invention:
- dispensing one or more first materials over the continuous band at a third axial position between the first and second axial positions for forming an inner layer of the hollow body;
- dispensing one or more second materials over the continuous band at a fourth axial position between the third and second axial positions for forming one or more subsequent layers of the hollow body;
thereby continuously forming the hollow body on the continuous band. Thereby, the continuous body advances axially from the fixed axial end towards the floating axial end.

The one or more first materials may comprise one or more of a C-veil, a resin, chopped glass and hoop glass. Additionally or alternatively, the one or more second materials may comprise one or more of a resin, hoop glass, sand, chopped glass and a C-veil.

The method may further comprise curing the one or more first materials and the one or more second materials dispensed over the continuous band at a third axial end further away from the fixed axial end than the first and second axial positions.

### BRIEF DESCRIPTION OF THE DRAWINGS

- Figs. 1-3: show schematic views of a fixed shaft of a CFW machine according to the invention. Fig. 1 shows a perspective view of the fixed shaft. Fig. 2 shows a zoomed-in perspective view of the fixed shaft of Fig. 1. Fig. 3 is a cross-sectional view corresponding to the perspective view of Fig. 2.
- Figs. 4-5: show schematic views of a rotary shaft of a CFW machine according to the invention. Fig. 4 shows a perspective view of the rotary shaft. Fig. 5 shows a cross-sectional view corresponding to the perspective view of Fig. 4.
- Fig. 6: shows a schematic cross-sectional view of a mandrel of a CFW machine according to the invention comprising the fixed shaft of Figs. 1-3 and the rotary shaft of Figs. 4-5 mounted thereon.
- Figs. 7-10: show schematic views of the mandrel of Fig. 6 mounted to a mandrel stand. Fig. 7 shows a perspective view. Fig. 8 shows a cross-sectional perspective view. Fig. 9 shows a side view. Fig. 10 shows a zoomed-in cross-sectional perspective view of the mandrel stand.
- Figs. 11-12: show schematic perspective views of the mandrel of Fig. 6 with radial structural elements mounted thereon. Fig. 11 shows a perspective view. Fig. 12 shows a zoomed-in perspective view.
- Fig. 13: shows a schematic cross-sectional view of one of the radial structural elements of Figs. 11-12.
- Fig. 14: shows a schematic perspective view of the mandrel of Figs. 7-10 including the radial structural elements of Figs. 11-12 and conveyor rails mounted thereon.
- Figs. 15-16: show schematic views of one of the conveyor rails of Fig. 14. Fig. 15 shows a perspective view. Fig. 16 shows a zoomed-in perspective view of the conveyor rail of Fig. 15.
- Figs. 17-18: show schematic perspective views of the mandrel of Fig. 14 with a second band conveying assembly attached to the mandrel. Fig. 17 shows a perspective view. Fig. 18 shows a zoomed-in perspective view.
- Figs. 19-20: show schematic perspective views of the second band conveying assembly of Figs. 17-18 from different view angles.
- Figs. 21-22: show schematic perspective views of a CFW machine according to the invention including a continuous band wound around the mandrel of Fig. 14 and guided by the second band conveying assembly of Figs. 17-20. Figs. 21 and 22 are schematic perspective views of a CFW machine.
- Fig. 23: shows a schematic detailed view of the path followed by the continuous band when guided by the second band conveying assembly of Figs. 21-22.
- Fig. 24: shows a schematic front view of a dosing unit arranged over the CFW machine of Fig. 21-22.
- Fig. 25: shows a schematic diagram of a production line for manufacturing a hollow body using a CFW machine according to the invention.

### DETAILED DESCRIPTION OF PREFERRED EMBODIMENTS

For the purposes of promoting an understanding of the principles of the invention, reference will now be made to a preferred embodiment illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to one skilled in the art to which the invention relates.

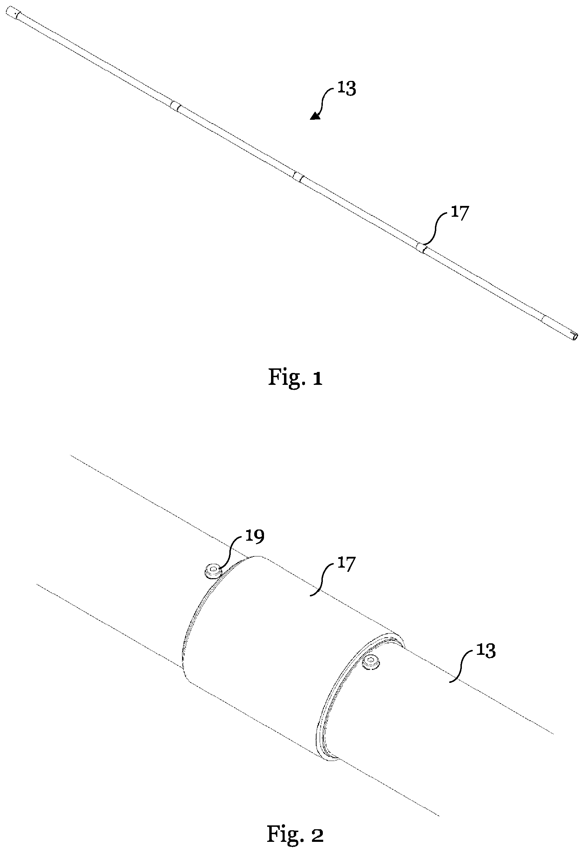

Figs. 1 to 3 shows schematic views of a fixed shaft 13 of a CFW machine according to an embodiment of the invention. Fig. 1 shows a perspective view of the fixed shaft 13. As seen in Fig. 1, the fixed shaft 13 has an elongated cylindrical shape. The fixed shaft 13 can be a hollow cylinder in some embodiments, but can also be a substantially solid cylinder in other embodiments, although still defining an interior axial channel through an interior thereof. As seen in Fig. 1, a plurality of ring-shaped Teflon separators 17 are arranged around the fixed shaft 13 on an outer surface thereof. In the exemplary embodiment shown, three separators 17 are shown. However, the number of separators 17 may be larger or smaller in other related embodiments.

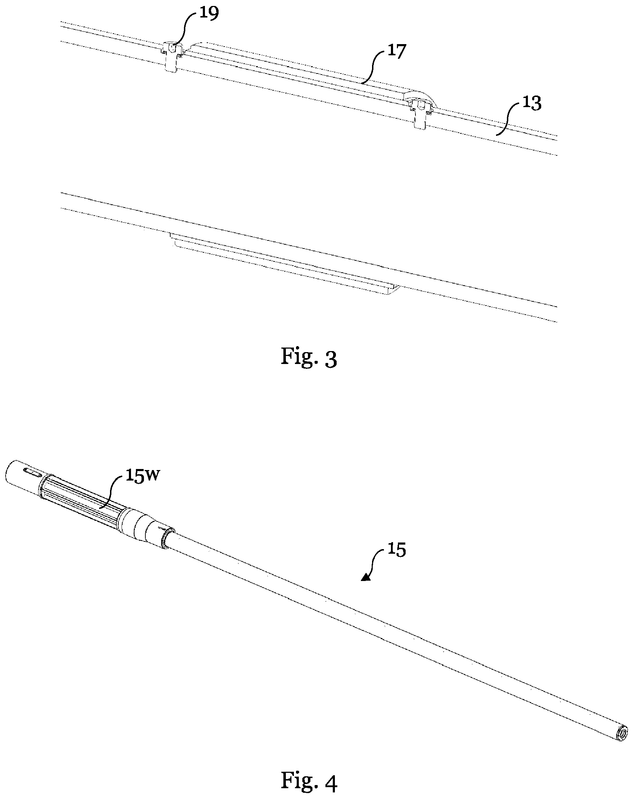

As seen in the zoomed-in view of Fig. 2, each of the separators 17 is kept in position by two retention elements 19 that are attached to the fixed shaft 13 and prevent the corresponding separator 17 from sliding along the axial direction of the fixed shaft 13. Fig. 3 shows a cross-sectional view corresponding to the perspective view of Fig. 2 showing the fixed shaft 13, one of the separators 17 and the two corresponding retention elements 19, which in the exemplary embodiment shown are configured as retention screws 19 screwed into the fixed shaft 13 adjacent to the separator 17 for fixing an axial position of the separator 17.

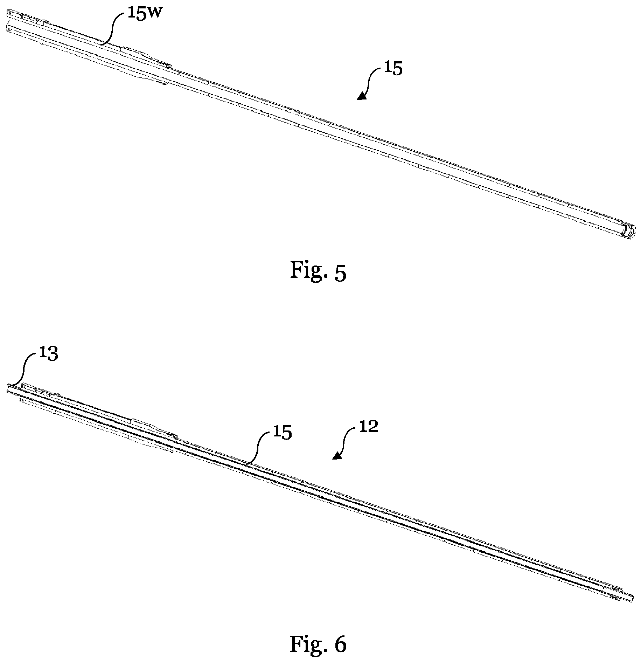

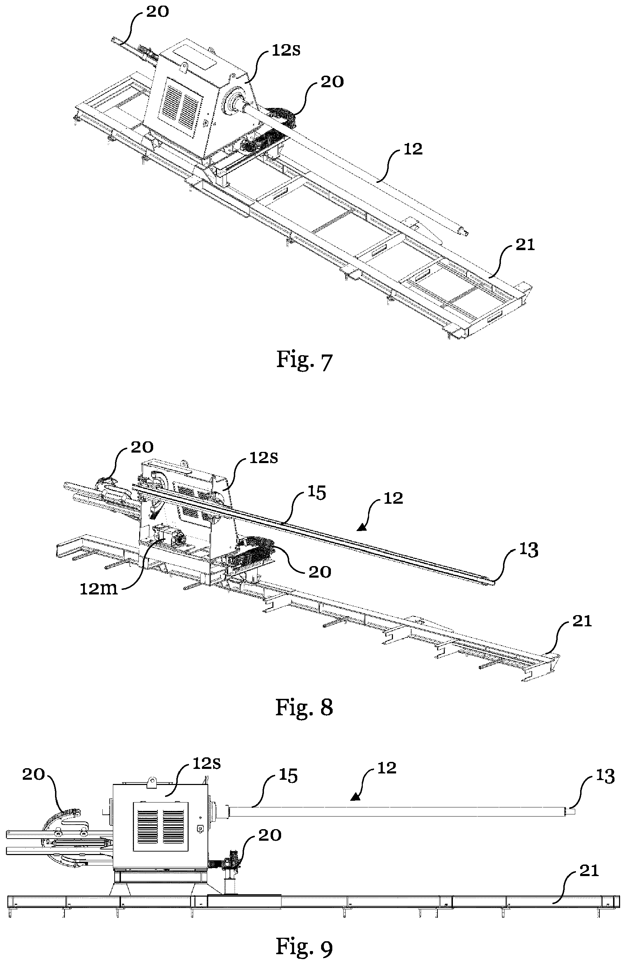

Figs. 4 and 5 show schematic views of a rotary shaft 15 of a CFW machine according to some embodiments of the invention. Fig. 4 shows a perspective view of the rotary shaft 15. As seen in Fig. 4, the rotary shaft 15 has, like the fixed shaft 13 shown in Figs. 1 to 3, an elongated cylindrical shape. The rotary shaft 15 has a larger diameter than the fixed shaft 13 and can have a shorter longitudinal (axial) extension. Also shown in Fig. 4 is a widened portion 15w of the rotary shaft 15 configured for mounting the rotary shaft 15 to a mandrel stand (see Figs. 7 to 10 below). Fig. 5 shows a cross-sectional view corresponding to the perspective view of Fig. 4. As seen in Fig. 5, the rotary shaft 15 is hollow.

Fig. 6 shows a schematic cross-sectional view of a mandrel 12 of a CFW machine according to some embodiments of the invention, wherein the fixed shaft of Figs. 1 to 3 is concentrically received within the rotary shaft of Figs. 4-5 such that the rotary shaft 15 is rotatable around the fixed shaft 13. The separators 17 arranged around the fixed shaft 13 can thereby act as bearings for the rotary shaft 15 radially separating the rotary shaft 15 from the fixed shaft 13. As seen in Fig. 6, the longitudinal extension of the fixed shaft 13 is greater than the longitudinal extension of the rotary shaft 15, such that the inner shaft 13 can protrude from the rotary shaft 15 in the axial direction at one or both longitudinal ends thereof (at both longitudinal ends in the exemplary embodiment illustrated in Fig. 6).

Figs. 7 to 10 show schematic views of the mandrel 12 of a CFW machine according to some embodiments of the invention. Fig. 7 shows a perspective view, Fig. 8 shows a cross-sectional perspective view, and Fig. 9 shows a side view. As seen in Figs. 7 to 9, the mandrel 12 of Fig. 6 is mounted to a mandrel stand 12s. The mandrel stand 12s is configured for holding the mandrel 12 in a cantilevered configuration by a fixed end of the mandrel, whereas an opposite end of the mandrel remains floating in the air. Further, as seen in the cross-sectional view of Fig. 8, the mandrel stand 12s comprises a motor 12m that is configured for driving a rotation of the rotary shaft 15 of the mandrel 12 around the fixed shaft 13. The mandrel stand 12s is supported by a supporting structure 21. As seen in Figs. 7 to 9, a first band conveying assembly 20 is mounted on the mandrel stand 12s and on the supporting structure 21.

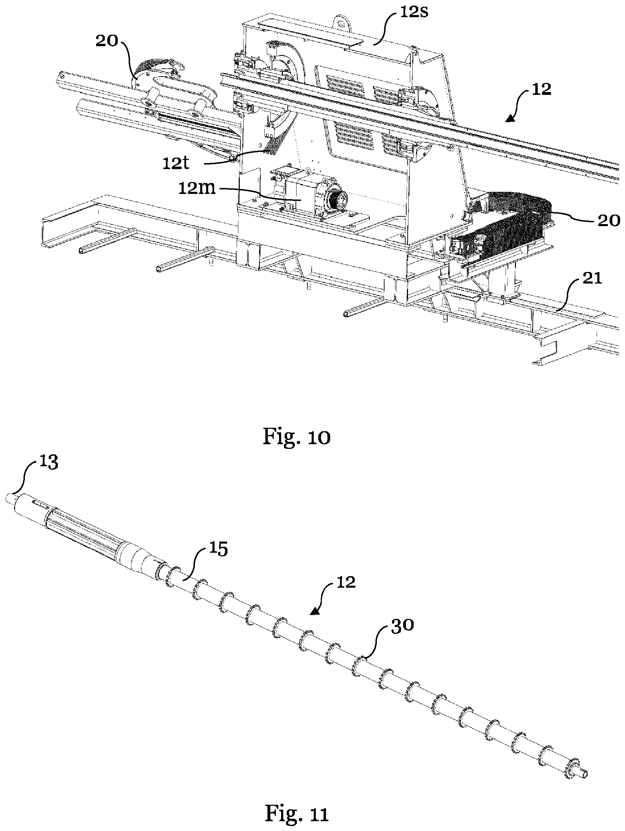

Fig. 10 offers a zoomed in cross-sectional view of the mandrel stand 12s. As seen in Fig. 10, the mandrel stand 12s comprises a transmission element 12t, for example a transmission belt or a transmission chain, configured for transmitting a rotary motion generated by the motor 12m to the rotary shaft 15 of the mandrel 12.

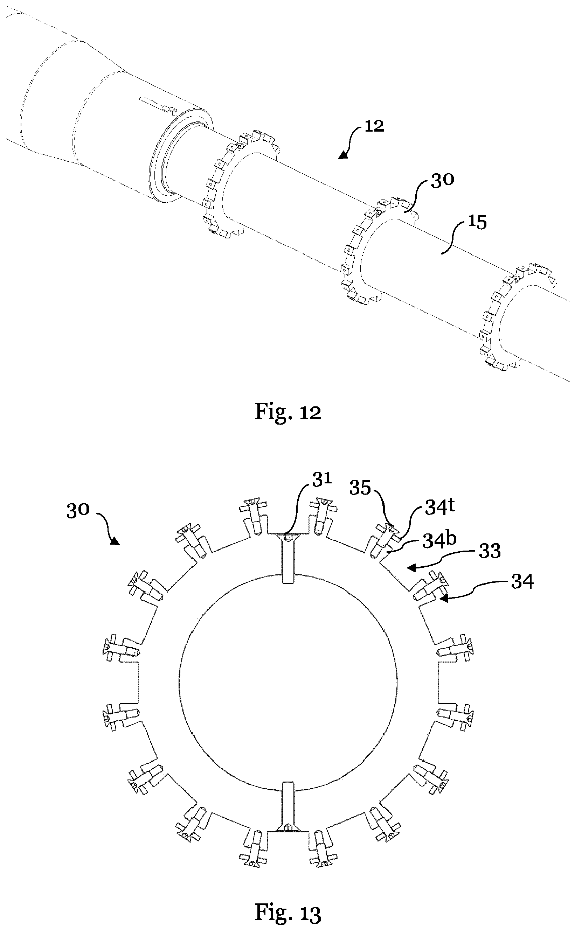

Figs. 11 to 12 show schematic views of the mandrel 12 of Fig. 6, wherein a plurality of radial structural elements 30 are attached to the mandrel 12, in particular to the outer surface of the rotary shaft 15 of the mandrel 12. In the exemplary embodiment shown, the radial structural elements 30, which extend radially with respect to the mandrel 12 parallel to each other, are configured as disc-shaped elements. The radial structural element 30 are all identical and are arranged on the mandrel 12 evenly spaced along the longitudinal (axial) direction thereof. Fig. 12 shows a zoomed-in perspective view of the mandrel 12 of Fig. 11 comprising the disc-shaped radial structural elements 30. The radial structural elements 30 can be arranged around the mandrel 12 by letting them slide axially in position from the floating end of the mandrel 12.

Fig. 13 shows a schematic cross-sectional view of one of the radial structural elements 30. As seen in Fig. 13, each of the radial structural elements 13 can comprise one or more removable attachment elements 31, in the exemplary embodiment shown two of them, for attaching the corresponding radial structural element 30 the outer surface of the rotary shaft 15 of the mandrel 12, thereby fixedly determining an axial position of the corresponding radial structural element 30 on the mandrel 12, such that there is no need to arrange spacers between each of the radial structural element 30 for preventing them to slide off in the axial direction. In the exemplary embodiment shown in Fig. 13, the removable attachment elements 31 are configured as screws that can be screwed into the rotary shaft 15 of the mandrel 12. For this purpose, corresponding threaded openings may be foreseen in the rotary shaft 15.

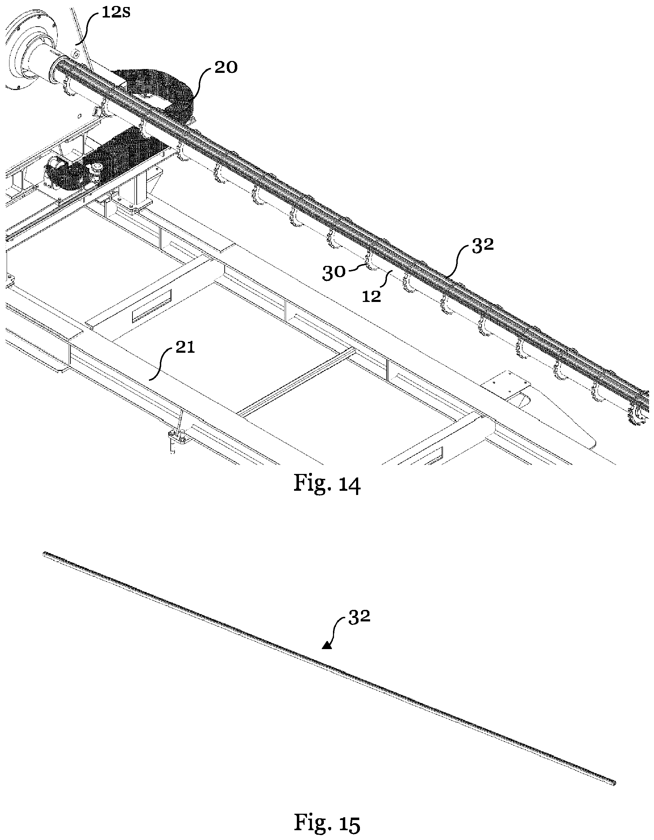

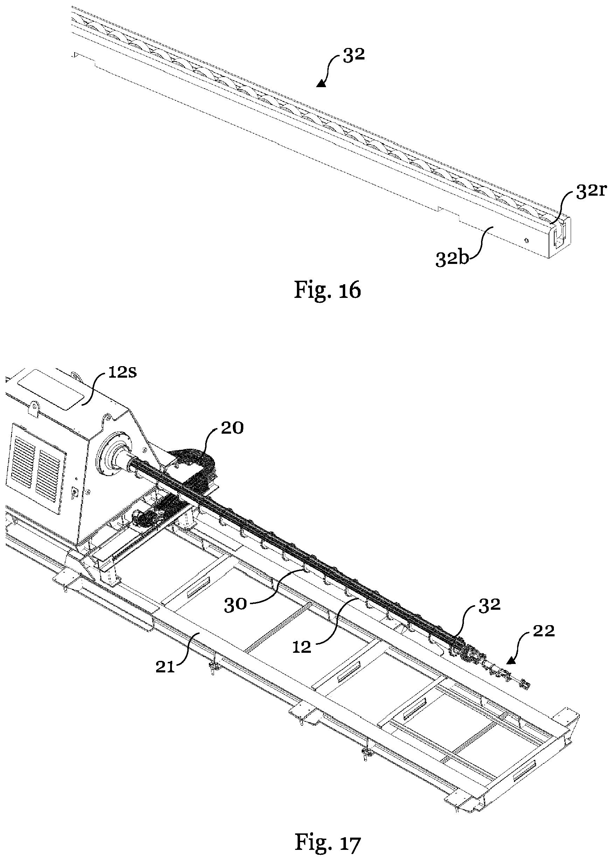

Fig. 14 shows a schematic perspective view of the mandrel 12 of Figs. 7 to 10 further including a plurality of conveyor rails 32 arranged around the mandrel 12. Fig. 15 shows a perspective view of one single conveyor rail 32, which can have a longitudinal extension substantially corresponding to a longitudinal extension of the mandrel 12. As seen in Fig. 16, which corresponds to a zoomed in view of one longitudinal end of the conveyor rail 32 shown in Fig. 15, the conveyor rail 32 is configured, in the exemplary embodiment under consideration, as a longitudinal beam 32b comprising a plurality of rolling elements 32r lined up in the longitudinal direction of the conveyor rail 32 and exposed at the upper outer surface of the conveyor rail 32, such that an object resting on the conveyor rail 32 from above abuts against the rolling elements 32r and can hence slide in the longitudinal direction against the rolling elements 32r.

Referring back to Fig. 14, a plurality of conveyor rails 32 extending axially with respect to the mandrel 12 are mounted on the radial structural elements 30 around the mandrel 12, on a perimeter of the plurality of radial structural elements 30. As a consequence, when the rotary shaft 15 of the mandrel 12 rotates, the radial structural elements 30 and the conveyor rails 30 rotate with the mandrel 12.

Referring back to Fig. 13, in the exemplary embodiment under consideration, the disc-shaped radial structural elements 30 each comprise a plurality of grooves 33 formed around the perimeter thereof and a plurality of teeth 34 interspaced with the plurality of grooves 33, such that each two neighbouring grooves 33 are mutually separated by an intermediate tooth 34 and vice versa. Each of the teeth 34 comprises a bottom part 34b that is fixedly attached to the rest of the radial structural element 30 and a separated independent top part 34t that is adjustably attachable to the respective bottom part 34b by means of an adjustment element 35, which can be configured as an adjustment screw 35.

The grooves 33 of the radial structural element 30 of Fig. 13 are configured for receiving therein the conveyor rails 32. As seen in Fig. 12, the grooves of different radial structural elements 30 are aligned with each other in the axial direction, such that each of the conveyor rails 32 can be received in one groove 33 of each of the radial structural elements 30, as shown in Fig. 14. Notably, only three conveyor rails 32 are exemplary represented in Fig. 14 for illustrative simplicity. However, during operation of the CFW machine, the entire perimeter of the mandrel 12, i.e. of the radial structural elements 30, is surrounded by conveyor rails 32 arranged in corresponding grooves 33 of the radial structural elements 30, such that all grooves 33 of the radial structural elements 30 receive a corresponding conveyor rail 32.

Referring back to Fig. 13, the adjustment elements 35 are configured for adjusting a radial distance between the top part 34t and the bottom part 34b of each of the teeth 34. The radial distance between the top part 34t and the bottom part 34b can for example be reduced by tightening the adjustment screw 35 and can be increased by loosening the adjustment screw 35. Thus, when the conveyor rails are received within the grooves 33, a lateral pressure exerted by the top part 34t over the neighbouring conveyor rails 32 may be adjusted by correspondingly adjusting the respective adjustment element 35. This allows to finely adjust the radial position of the conveyor rails 32 for each radial structural element 30.

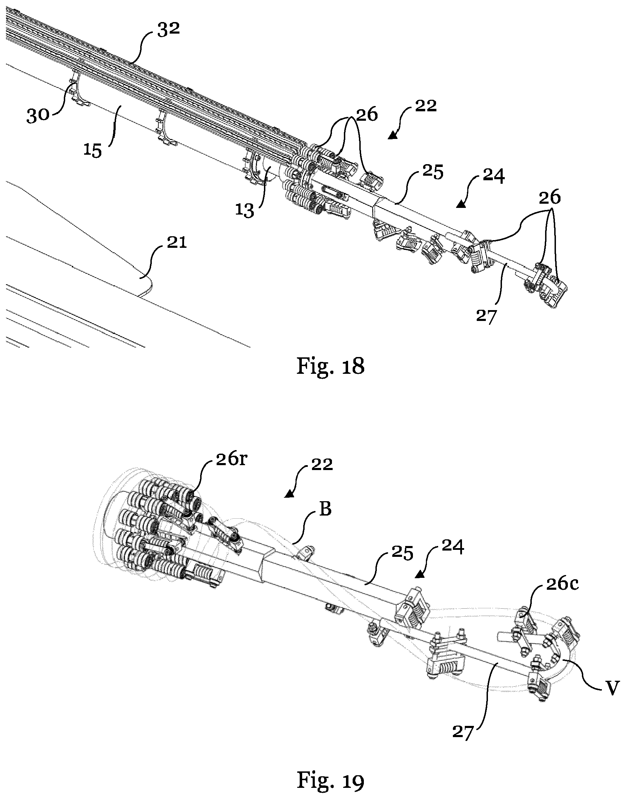

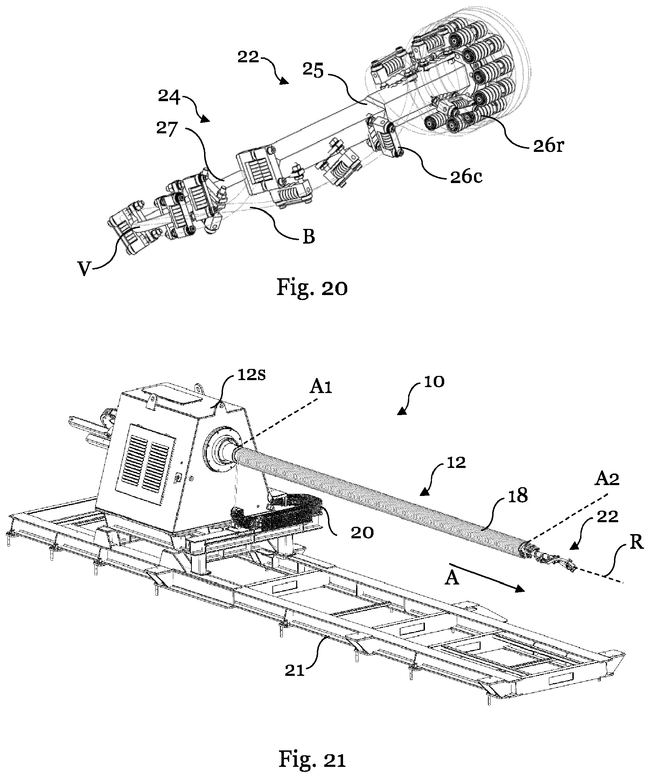

Fig. 17 shows a perspective view of the mandrel 12 of Fig. 14 further comprising a second band conveying assembly 22 attached to the fixed shaft 13 of the mandrel 12 at the floating end thereof (i.e. distally from the mandrel stand 12s). The second band conveying assembly 22 extends in the axial direction away from the mandrel 12 forming an axial prolongation of the mandrel 12. Fig. 18 shows a zoomed-in view of the second band conveying assembly 22 attached to the mandrel 12 of Fig. 17 by the inner shaft 13. Figs. 19 and 20 show perspective views of the isolated second band conveying assembly 22.

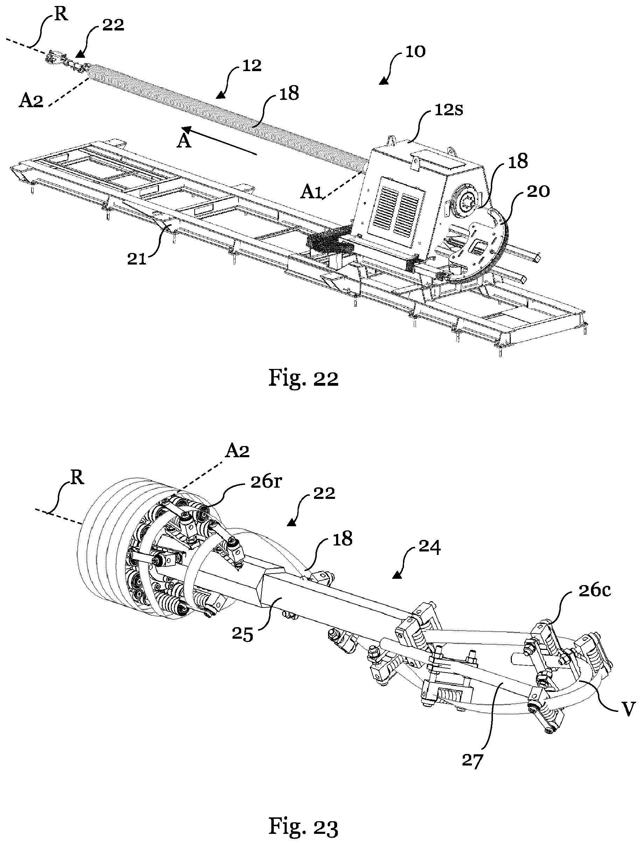

Figs. 21 and 22 show schematic perspective views of a CFW machine 10 according to some embodiments of the invention. The CFW machine 10 is based on the mandrel configuration illustrated in Fig. 17 and 18 and further incorporates a continuous steel band 18 that is helically wound around the mandrel 12 on the conveyor rails 32. As indicated in Fig. 21, continuous band 18 is wound around the mandrel 12 on the conveyor rails 32 and on a portion of the second band conveying assembly 22 axially proximal to the mandrel 12, between a first axial position A1 located close to the fixed end of the mandrel 12 that is attached to the mandrel stand 12s and a second axial position A2, which in the exemplary embodiment shown corresponds to an axial position in which the second band conveying assembly 22 extends. In other related embodiments, the second axial position A2 can correspond to an axial end of the mandrel 12.

Between the first axial position A1 and the second axial position A2, the continuous band 18 is helically wound having a predetermined constant diameter, for example a diameter of 250 mm or 200 mm, and a predetermined constant helix pitch that corresponds to a width of the continuous band such that each turning of the continuous band is in contact with the adjacent turnings and there is no empty space between successive turnings of the continuous band 18 between the first axial position A1 and the second axial position A2. For example, the continuous band 18 can have a width of 40 mm and can be helically wound between the first axial position A1 and the second axial position A2 with a constant helix pitch of 40 mm.

The continuous band 18 works as a mould for a hollow body to be manufactured using the CFW machine 10 and operates as an endless band that continuously advances in the axial direction from the first axial position A1 towards the second axial direction A2. As the mandrel 12, in particular the rotary shaft 15, rotates, the rotary motion of the mandrel 12 is transmitted to the continuous band 18 and the helicoidal winding of the continuous band 18 causes the continuous band 18 to advance in the axial direction from the first axial position A1 towards the second axial position A2 by sliding against the rolling elements 32r of the conveyor rails 32 (cf. Fig. 16).

As part of the continuous movement of the continuous band 18, the first band conveying assembly 20 continuously feeds the continuous band 18 to the first axial position A1 for being helically wound around the mandrel 12. In the exemplary embodiment shown in Fig. 21, the first band conveying assembly 20 feeds the continuous band 18 to the mandrel 12 at the first axial position A1 vertically from below. The continuous band 18 then moves axially towards the second axial position A2 due to the rotation of the mandrel. The second axial position A2 is located downstream from the first axial position A1.

Downstream from the second axial position A2, the second band conveying assembly 22 refeeds the continuous band 18 to the first band conveying assembly 20 through the interior of the second band conveying assembly 22, through the interior of the mandrel 12, in particular through the interior of the inner shaft 13, and through the interior of the mandrel stand 12s, as shown in Fig. 22. Coming from the interior of the mandrel 12 and from the interior of the mandrel stand 12s, the continuous band 18 is guided by the first band conveying assembly 20 around the mandrel stand 12s and is delivered back onto the outer surface of the mandrel 12 at the first axial position A1 (see Fig. 21).

As shown in Figs. 18, 19 and 20, the second band conveying assembly 22 comprises a guiding structure 24 that is formed by a plurality of band guiding elements 26 that are configured for guiding the continuous band, downstream from the second axial position A2. In Figs. 19 and 20, although the continuous band 18 is not shown, the path followed by the continuous band 18 when the continuous band 18 is guided by the guiding elements 26 is indicated with dashed lines.

As seen in Fig. 18, the second band conveying assembly 22 comprises a substantially cylindrical axial portion 25 that is fixedly attached to the inner shaft 13 of the mandrel 12 and is hence static with respect to the inner shaft 13 of the mandrel 12. As shown in Figs. 19 and 20, at a proximal end of the second band conveying assembly 22 closest to the mandrel 12, the second band conveying assembly 22 comprises a plurality of guiding elements 26 attached to the axial portion 25 and configured as rolling elements 26r that are configured for guiding the continuous band 18 around an axial projection of the rotation axis of the mandrel 12 to the second axial position A2 still having the same constant diameter and helix pitch that the continuous band 18 has in a portion of the continuous band 18 that is wound around the mandrel 12.

From the second axial position A2 onwards, the guiding elements 26 of the guiding structure 24 of the second band conveying assembly 22 are configured for modifying the helicoidal path of the continuous band 18 such that a diameter of the continuous band 18 starts decreasing and a helix pitch of the continuous band 18 starts increasing with increasing distance from the first axial position A1 (and from the second axial position A2). A plurality of additional guiding elements 26 that are attached to the axial portion 25, some of which can be configured as rolling elements 26r and some of which can be configured as sliding-clamping elements 26c, are configured for guiding the continuous band 18, in particular a portion thereof at which the continuous band 18 has a diameter smaller than the diameter it has between the first axial position A1 and the second axial position A2 (i.e. when one around the mandrel 12), around axial projection of the rotation axis of the mandrel. The guiding elements 26 guide said portion of the continuous band 18 with reduced diameter and increased helix pitch such that the continuous band 18 loops around the axial projection of the rotation axis of the mandrel about 2,5 times before reaching a vertex V, at which some guiding elements that are attached to a curved portion 27 of the second band conveying assembly 22, reorient the continuous band 18 in the axial direction such that it no longer advances away from the first and second axial positions A1, A2 but instead start advancing back towards the first axial position A1 after the vertex V through the interior of the second band conveying assembly 22, in particular through the interior of the axial portion 25 thereof and through the interior of the mandrel 12, in particular through the interior of the inner shaft 13.

For this purpose, the curved portion 27 is curved with respect to the axial direction and defines a vertex V at which an axial component of the path followed by the continuous band 18 is inverted. The path followed by the continuous band 18 on the second band conveying assembly 22 is illustrated in Fig. 23. As seen in Fig. 23, downstream from the second axial position A2, the guiding elements 26 guide the continuous band 18 such that its diameter decreases and its helix pitch increases as compared to the situation upstream from the second axial position A2.

Between the second axial position A2 and the vertex V, the continuous band 18 is guided by the guiding elements 26 of the guiding structure 24 of the second band conveying assembly 22 such that it completes two full (360°) loops around the axial projection of the rotation axis of the mandrel 12 and even further completes an additional half loop before reaching the vertex V, at which an axial component of the path followed by the continuous band 18 is inverted and the continuous band 18 is oriented towards a first axial position A1 through the interior of the axial portion 25 of the second band conveying assembly 22.

As seen in Fig. 23, from the second axial position A2 towards the vertex position V, the diameter of the continuous band 18 decreases and the helix pitch of the continuous band 18 increases. Thanks to this configuration, the functionality of the continuous band 18 is guaranteed despite having a relatively small diameter of 250 mm or less when wound around the mandrel 12. This allows reliably manufacturing hollow bodies with such reduced diameters using the CFW machine 10.

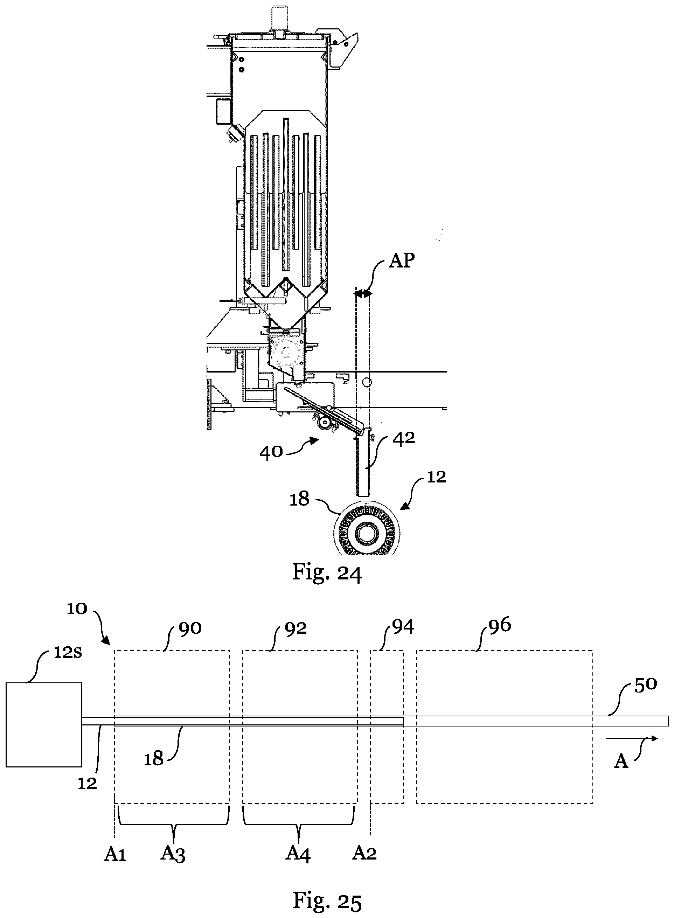

Fig. 24 schematically illustrates, from a front view perspective in which the axial direction of the mandrel 12 is perpendicular to the plane of the paper, a dosing unit 40 that is arranged over the mandrel 12 and configured for dispensing one or more materials over the continuous band 18 that is wound around the mandrel 12. The dosing unit 40 may for example be configured for dispensing sand over the continuous band 18. As shown in Fig. 24, the dosing unit 40 comprises an output box 42 that is arranged vertically with respect to the continuous band 18 and has an aperture AP in a direction perpendicular to the axial direction (in a left to right direction on the paper) of about 3 cm. The aperture AP corresponds to a distance between opposing vertical walls of the output box 42 through which a material, for example sand, is delivered upon the continuous band 18. This configuration allows dispensing the material upon the continuous band in a concentrated and localised region in space for manufacturing hollow bodies having small diameters.

Fig. 25 schematically illustrates different manufacturing stages of a method for manufacturing a hollow body 50 using a CFW machine like the CFW machine 10 illustrated in Figs. 21 and 22 and possibly using the dosing unit 40 illustrated in Fig. 24. The hollow body 50 can be a GRP pipe having a diameter of for example 250 mm, 225 mm, 200 mm, 175 mm, 150 mm or less.

Fig. 25 shows a schematic lateral view of the CFW machine 10, which has a mandrel 12 extending in the axial direction A and a continuous band 18 that is wound around the mandrel 12 and between a first axial position A1 and a second axial position A2. The continuous band 18 is helically wound around the mandrel 12 and around an axial projection thereof having a constant diameter between the first axial position A1 and the second axial position A2 that corresponds to an inner diameter of the hollow body 50 that is being manufactured. As the mandrel 12 of the CFW machine 10 rotates driven by the mandrel stand 12s, the continuous band 18 rotates with the mandrel 12 and advances in the axial direction A continuously from the first axial position A1 towards the second axial position A2 as explained above.

Fig. 25 shows different axial regions 90, 92, 94 and 96 of the production line. The axial regions 90 and 92 are arranged between the first axial position A1 and the second axial position A2 and correspond to axial regions in which the continuous band 18 is wound around the mandrel 12. In the first axial region 90, which corresponds to a third axial position A3 (or range of axial positions), one or more first materials are dispensed over the continuous band 18 for forming an inner layer of the hollow body 50. This can comprise using a dosing unit 40 as represented in Fig. 24 for dispensing for example sand over the continuous band 18.

In the second axial region 92, which corresponds to a fourth axial position A4 (or range of axial positions), one or more second materials are dispensed over the continuous band 18 (onto the inner layer) for forming one or more subsequent layers of the hollow body 50 over the inner layer. In the third axial region 94, the CFW machine 10 comprises a second band conveying assembly 22 that guides the continuous band 18 as previously described above with respect to Figs. 18 to 20 and 23.

The axial advancing movement of the continuous band 18 driven by the rotation of the mandrel 12 causes the materials deposited over the continuous band in the first axial region 90 and in the second axial region 92 to continuously advance in the axial direction away from the first axial position A1. As a result, the hollow body 50 continuously and increasingly protrudes in the axial direction away from the first axial end A1 past the second axial position A2. In the first and second axial regions 90, 92, the hollow body being manufactured is supported by the continuous band 18, which acts as a mould. In the third axial region 94, the continuous band 18 separates from the hollow body 50. In the fourth axial region 96, the hollow body 50 is no longer resting on the continuous band 18 and further tools can be foreseen for example for curing the hollow body 50 and/or for cutting an axial portion of the hollow body 50 having a desired length.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

## Claims

1. A continuous filament winding, CFW, machine (10) for manufacturing a hollow body comprising:
a rotary mandrel (12);
a continuous band (18) helically wound around the mandrel (12) between a first axial position (A1) and a second axial position (A2), wherein a rotation of the mandrel (12) causes a portion of the continuous band (18) wound around the mandrel (12) to rotate with the mandrel (12) and to advance axially from the first axial position (A1) towards the second axial position (A2);
a first band conveying assembly (20) for dispensing the continuous band (18) at the first axial position (A1) for winding around the mandrel (12), and
a second band conveying assembly (22) for refeeding the continuous band (18) to the first band conveying assembly (20) from the second axial position (A2), wherein the second band conveying assembly (22) comprises a guiding structure (24) configured for guiding the continuous band (18) from the second axial position (A2) towards the first axial position (A1) within a space radially confined by a diameter of said portion of the continuous band (18) wound around the mandrel (12);
wherein the guiding structure (24) is configured for guiding the continuous band (18) downstream from the second axial position (A2) away from the second axial position (A2) around an axial projection of a rotation axis of the mandrel (12) such that a portion of the continuous band (18) having a diameter smaller than the diameter of said portion of the continuous band (18) wound around the mandrel (12) loops around said axial projection of the rotation axis of the mandrel (12) at least once, preferably at least twice,
before guiding the continuous band (18) towards the first axial position (A1).

2. The CFW machine of claim 1, wherein the diameter of said portion of the continuous band (18) wound around the mandrel (12) is 300 mm or less, preferably 280 mm or less, more preferably 250 mm or less.

3. The CFW machine of claim 1 or 2, wherein the guiding structure (24) is configured for guiding the continuous band (18), in particular said portion of the continuous band (18) having a diameter smaller than the diameter of said portion of the continuous band (18) wound around the mandrel (12), around the axial projection of the rotation axis of the mandrel (12) with a helix pitch that increases with increasing distance from the first axial position (A1), at least over a portion of an axial extension of the continuous band (18), before guiding the continuous band (18) towards the first axial position (A1).

4. The CFW machine of any of the preceding claims, wherein the guiding structure (24) is configured for guiding said portion of the continuous band (18) having a diameter smaller than the diameter of said portion of the continuous band (18) wound around the mandrel (12) around the axial projection of the rotation axis of the mandrel (12) with a diameter that decreases with increasing distance from the first axial position (A1), at least over a portion of an axial extension of the continuous band (18), before guiding the continuous band (18) towards the first axial position (A1).

5. The CFW machine of any of the preceding claims, wherein the second band conveying assembly (22) comprises an axial portion (25) extending in the axial direction (A) distally from the mandrel (12) and a plurality of band guiding elements (26) for guiding the continuous band (18) around the axial projection of the rotation axis of the mandrel (12) and towards the first axial position (A1), wherein the band guiding elements (26) are preferably configured as rolling elements (26r) and/or as sliding-clamping elements (26c).

6. The CFW machine of any of the preceding claims, further comprising a plurality of radial structural elements (30) attached to the mandrel (12) extending radially with respect to the mandrel (12) parallel to each other; and
a plurality of conveyor rails (32) extending axially with respect to the mandrel (12) between the first axial position (A1) and the second axial position (A2), wherein the plurality of conveyor rails (32) are mounted on the plurality of radial structural elements (30), such that the plurality of conveyor rails (32) are arranged around the mandrel (12); wherein the continuous band (18) is wound around the mandrel (12) on the conveyor rails (32).

7. The CFW machine of claim 6, wherein the radial structural elements (30) are configured for being attached to the mandrel (12) by means of removable attachment elements (31), in particular screws, preferably without any spacers between the radial structural elements (30).

8. The CFW machine of any of claims 6 or 7, wherein the radial structural elements (30) are disc-shaped elements comprising a plurality of grooves (33) formed around the perimeter thereof, each groove (33) being configured for receiving a part of one of the plurality of conveyor rails (32).

9. The CFW machine of claim 8, wherein a plurality of radially protruding teeth (34) are formed alternatingly interspaced with the plurality of grooves (33), wherein each tooth (34) of the plurality of teeth (34) comprises a bottom part (34b) fixedly attached to the rest of the corresponding radial structural element (30) and a separated top part (34t) adjustably attachable to the respective bottom part (34b) by means of an adjustment element (35),
wherein the radial structural elements (30) and the adjustment elements (35) are configured such that a radial distance between the top part (34t) of each tooth (34) and the corresponding bottom part (34b) is reduced by tightening the respective adjustment element (35), thereby increasing a lateral pressure exerted upon the laterally adjacent conveyor rails (32) received in respective neighbouring grooves (33).

10. The CFW machine of any of the preceding claims, wherein the continuous band (18) as a thickness (T) from 0,4 mm to 2,5 mm, preferably from 0,65 mm to 2,0 mm and/or wherein the continuous steel band has a width from 10 mm to 80 mm, preferably from 30 mm to 50 mm.

11. The CFW machine of any of the preceding claims, further comprising a dosing unit (40) for dispensing one or more materials over the continuous band (18), wherein the dosing unit (40) comprises an output box (42) arranged substantially vertical with respect to the continuous band (18), wherein the output box preferably has an aperture (AP) in a direction perpendicular to the axial direction (A) of 1 cm to 5 cm.

12. The CFW machine of any of the preceding claims, wherein the mandrel (12) comprises a fixed shaft (13) and a rotary shaft (15), wherein the fixed shaft (13) is concentrically received within the rotary shaft (15) such that the rotary shaft (15) is rotatable around the fixed shaft (13), wherein one or more separators (17) are preferably arranged on and around the fixed shaft (13) between the fixed shaft (13) and the rotary shaft (15).

13. A method for manufacturing a hollow body (50) using a CFW machine, wherein the CFW machine preferably is a CFW machine (10) according to any of claims 1 to 12, wherein the CFW machine comprises a continuous band (18) rotating around an axis of rotation and helically wound around the axis of rotation having a constant diameter between a first axial position (A1) and a second axial position (A2), wherein the method comprises guiding the continuous band (18) downstream and away from the second axial position (A2) around a the rotation axis such that a portion of the continuous band (18) having a diameter smaller than said constant diameter loops around the rotation axis at least once, preferably at least twice, before guiding the continuous band (18) towards the first axial position (A1).

14. The method of claim 13, wherein the hollow body (50) has an inner diameter of 300 mm or less, preferably 280 mm or less, more preferably 250 mm or less, wherein the hollow body preferably is a pipe, in particular a glass reinforced plastic pipe.

15. The method of claim 13 or 14, further comprising performing the following processes while the continuous band (18) is rotating around the rotation axis and continually advancing axially from the first axial position (A1) towards the second axial position (A2):
- dispensing one or more first materials over the continuous band (18) at a third axial position (A3) between the first and second axial positions (A1, A2) for forming an inner layer of the hollow body;
- dispensing one or more second materials over the continuous band (18) at a fourth axial position (A4) between the third and second axial positions (A3, A2) for forming one or more subsequent layers of the hollow body;
thereby continuously forming the hollow body on the continuous band (18).
